# EUROPEAN PATENT SPECIFICATION

(11) **EP 2 235 367 B1**
(45) Date of publication and mention of the grant of the patent: **16.03.2016**
(21) Application number: 08753768.4
(22) Date of filing: 14.05.2008
(51) Int. Cl.: H02J 3/36, H02J 3/38, F03D 9/00

(54) **WIND TURBINE PARK**
WINDPARK
PARC D'ÉOLIENNES

(30) Priority: 21.12.2007 SE 0702878; 08.02.2008 SE 0800291
(43) Date of publication of application: 06.10.2010
(73) Proprietor: 2-B Energy Holding B.V., 7631 HS Ootmarsum (NL)
(72) Inventor: JAKOBSSON, Johan Mikael, Grands Pass Oregon 95275 (US); PEELS, Huibertus Cornelis, NL-7631 HS Ootmarsum (NL)
(74) Representative: V.O.
(86) International application number: PCT/NL2008/050285
(87) International publication number: WO 2009/082204

(56) References cited:
- EP-A2- 1 821 382
- WO-A1-01/48892
- WO-A2-02/054561
- GB-A- 2 023 237
- GB-A- 2 410 386
- US-A1- 2003 126 060
- J. T. TANGLER: "The Evolution of Rotor and Blade Design" AMERICAN WIND ASSOCIATION - WINDPOWER 2000 (30-04-2000 - 04-05-2000), [Online] July 2000 (2000-07), XP002516567 Palm Spring, California Retrieved from the Internet: URL:http://www.nrel.gov/docs/fy00osti/2841 0.pdf>
- S. ENGSTRÖM: "Soft Yaw Drives for Wind Turbines" DEWI MAGAZIN, [Online] no. 18, 1 February 2001 (2001-02-01), pages 72-75, XP002516568 Retrieved from the Internet: URL:http://www.dewi.de/dewi/fileadmin/pdf/ publications/Magazin_18/09.pdf>
- C. JAUCH, A. D. HANSEN, P. SORENSEN, F. BLAABJERG: "Simulation Model of an Active-stall Fixed-speed Wind turbine controller" WIND ENGINEERING, vol. 28, no. 2, 2004, pages 117-195, XP002516569

## Description

### Technical Field

The invention relates to a wind turbine park comprising a group of similar wind turbines, wherein each wind turbine comprises a tower supporting a nacelle with a number of blades.

### Background

Wind turbine parks are commonly used for producing electricity. In particular large wind turbine parks are often located in remote areas, such as offshore locations, mountainous locations or other areas. Remote areas are advantageous locations for wind turbine parks due to the relatively undisturbed wind capacity. Remote locations, however, are difficult to access, which makes installation, exploitation and/or maintenance of a remotely located wind turbine park relatively expensive. Also, transporting the produced electricity from the remote location to a public electricity grid can be relatively expensive.

D1 (US 2003/126060) describes a system, method, and computer program product for enhancing commercial value of electrical power produced from a renewable energy power production facility. The invention includes a communications infrastructure and coordination mechanism for establishing a relationship with another power production facility. The publication is using a wind farm as an example for the renewable power production facility.

D2 (WO 02/054561) is a further step following D1 detailing the approach including a time variable output power from a renewable power facility, a reference against a predetermined minimum power level, and a power supplement from a (co-active) converter including a reactive power compensation mechanism. Amongst wind turbines; it specifically mentions solar power, wave power, tidal and ocean current power as examples of renewable power generating facilities. D3 describes the use of an extruded HVDC power cable at a high DC potential relative to ground in AC-fed windings of electrical machines/transformers, the magnetic flux carriers of which are at ground potential. Further D3 describes the composition of the HVDC cable in more detail. The use or purpose of an HVDC system is not mentioned.

The invention contemplates a wind turbine park, wherein at least one of the above mentioned drawbacks is obviated.

### Summary of the invention

The invention provides for a wind turbine park according to claim 1 comprising a group of similar wind turbines, wherein each wind turbine comprises a tower supporting a nacelle with a number of blades, wherein each individual wind turbine is transformerless and comprises a high voltage asynchronous generator for producing electricity in an alternating current mode, wherein the wind turbine park comprises a transformer central to a group of similar transformerless wind turbines for transforming the produced electricity to a higher voltage, a central control unit for optimizing the electricity production of the group of similar transformerless wind turbines and a HVDC-system for transporting the produced electricity in a direct current mode towards a public electricity grid.

### Brief description of the drawings

Fig. 1 shows a schematic overview of a wind turbine park according to the invention;
Fug. 2 shows a schematic perspective view of a wind turbine according to the invention; and
Fig. 3 shows a schematic perspective view of a nacelle according to the invention.

### Description of the invention

Wind turbine parks may comprise a group of similar wind turbines, e.g. six or eight similar wind turbines. Large wind turbine parks may comprise more than one group of similar wind turbines, and may comprise in total e.g. more than 50 wind turbines. All wind turbines in a group may be similar and each may comprise a tower supporting a nacelle with a number of blades. Providing similar wind turbines in one group may make design and/or installation and/or exploitation and/or maintenance of the wind turbine park simpler and more cost effective.

The wind turbines in the group may be connected in a local group electricity grid. The wind turbines may deliver their produced electricity to this local group grid. The local grid may further be connected in a wind turbine park grid, together with other local group grids. The wind turbine park grid may be connected to a further electricity grid, e.g. another wind turbine park grid or the public electricity grid.

Each individual wind turbine of the group of similar wind turbines may be a transformerless wind turbine comprising a high voltage asynchronous generator for producing electricity in an alternating current mode. Each wind turbine thus may comprise fewer parts, rendering installation and/or maintenance more cost effective. By providing an asynchronous generator in the wind turbine that may produce electricity at a relatively high voltage, a transformer for transforming the produced electricity to a higher voltage may be omitted in the wind turbine. A transformer central to a group of wind turbines can then suffice to transform the produced electricity from all the wind turbines of the group to a higher voltage at once. The voltage of the electricity produced by the asynchronous generator may be larger than approximately 1 kV. Preferably, the voltage is between approximately 5 kV and approximately 15 kV.

By omitting the transformer in the nacelle, the environment in the nacelle may be an ambient temperature environment, so that a climate control system for the nacelle may be left out. However, some components in the nacelle may require individual climate control, independently the other components, so that individual climate control for the component may then be provided, wherein the environment in the nacelle may be an ambient temperature environment. By omitting the nacelle climate control system, fewer components may be provided in the nacelle. Thus, the nacelle may become more robust.

The wind turbine park may comprise a number of groups of wind turbines, in which case a further transformer central to the number of groups of wind turbines may be provided. Each group of wind turbines may be provided with a central transformer. This central transformer may for example transform the electricity produced by the high voltage generator to a higher frequency, e.g. from approximately 10 kV to approximately 70 kV, for example about 66 kV. Further, the number of groups of wind turbines may be coupled to a further transformer central to the number of groups of wind turbines. This further transformer may for example transform the transformed electricity e.g. from approximately 70 kV, for example about 66 kV, to a higher voltage, e.g. approximately 150 kV or approximately 130 kV, for example about 132 kV.

Further, the group of similar wind turbines may comprise a central control unit for optimizing the electricity production of the group of similar transformerless wind turbines. By implementing a central control unit, optimal use may be made of the asynchronous generator. The asynchronous generator may follow the frequency of the local group electricity grid.

Advantageously, the frequency of the local group electricity grid may be controlled by the control unit. The control unit may use individual wind turbine parameters to adjust the local grid frequency. The individual wind turbine parameters, such as wind velocity, wind direction, generator power consumption, wind turbine blades rpm (rotations per minute), generator power output, air temperature, air humidity, may be measured and may be used by the control unit to optimize the grid frequency. The asynchronous generator in each wind turbine may then follow the adjusted grid frequency. Depending on the individual wind turbine parameters, the electricity production of the wind turbine group may be optimized. The electricity produced by the asynchronous generators in the wind turbines may vary with the adjusted grid frequency depending on the collected individual wind parameters, so that the wind turbines of the group may produce electricity in a relatively optimal mode.

Additionally, the central control unit may use local group grid data to adjust the local grid frequency. As local group grid data the actual grid frequency and/or the voltage and/or the collective power production may be used.

For transporting the electricity produced by the wind turbine park from the remote location to e.g. a public electricity grid an HVDC-system may be used. An HVDC-system (High Voltage Direct Current-system) may transport electricity at a relatively high voltage in a direct current mode over a relatively large distance. The HVDC-system may comprise two substations, one substation may be connected to the wind turbine park electricity grid, e.g. an offshore substation, and one substation may be connected to the public electricity grid, e.g. an onshore substation. The electricity grid of the wind turbine park may be connected to the offshore substation, where the produced electricity may be collected. The electricity may be produced in an alternating current mode. For transport to shore via the HVDC-system in a direct current mode, an ACDC-converter may be provided to convert the produced electricity from an alternating current mode to a direct current mode. At the onshore substation, also an ACDC-converter may be provided to convert the electricity from direct current mode to an alternating current mode for delivery to a public electricity grid that may use an alternating current mode. The central control unit may instruct the offshore substation of the HVDC-system to adjust the grid frequency of the local group electricity grid.

Also, a converter central to the group of similar wind turbines may be provided for converting the frequency of the produced electricity. The asynchronous generators of the wind turbines may produce electricity at the frequency of the local group grid frequency. When adapting the produced electricity for transport over a relatively large distance to shore for example, the frequency of the produced electricity may be adjusted as well. By providing a central converter, the frequency of the produced electricity may be converted at once.

The nacelle and the blades may be provided as a modular unit for mounting and/or demounting on the tower of a wind turbine. By providing a modular unit, installation of the wind turbine and/or maintenance of the wind turbine at a remote location may be rendered more cost effective. The nacelle and blades may be installed as one unit onto the tower, which may reduce the time for installation and may reduce the actions during installation, thereby reducing the costs for installation. If maintenance of the blades and/or nacelle is required, the nacelle and blade modular unit may be replaced in a cost effective way by another modular unit with similar characteristics of nacelle and blades. The modular unit that requires maintenance may then be transported to a location where the maintenance can be done in a relatively protected environment, e.g. a shore location or a maintenance barge. The downtime of the wind turbine may become minimal, so that exploitation of the wind turbine park may become more cost effective. The revised modular unit may then be used to replace another modular unit that may need maintenance. The modular unit may be connected to the tower e.g. by bolting, screwing or other connection means.

The coupling between the nacelle and the tower may be of the soft yaw type. By adjusting the yaw angle, the wind turbine blades may be oriented more in the wind direction in order to more optimally benefit from the wind. By using a soft yaw coupling, the nacelle with wind turbine blades may follow the wind direction relatively passively. The yaw motors may be used rather sparsely, which may lead to less power consumption by the yaw motors and less wear and tear of the yaw motors. The yaw motors instead may provide damping for smooth operation and may reduce loads and/or oscillation in the tower structure. Thus, relatively expensive yaw brakes may be omitted.

Further, the blades may be arranged on the tower in a downwind configuration with respect to the tower. When the blades are part of the modular unit, together with the nacelle, the configuration of the modular unit may be such that, when installed, the blades have a downwind configuration with respect to the tower. In a downwind configuration, the blades are behind the tower with respect to the wind direction, so that the wind may first meet the tower and nacelle and then the blades.

The wind turbine tower may comprise a truss tower which may for example be anchored directly to the seabed. A truss tower may also be known as a lattice tower and/or a jacket. Typically, a truss tower may comprise slender truss members that are connected at joints, usually by welding. A truss tower may be anchored to the seabed by for example foundation piles, or a gravity based structure.

Further, the blades may be of the soft blade type. Wind turbine blades of the soft blade type may also be known as flexible blades or flex-blades. In a downwind configuration, soft blades may be used. Soft blades may bend at higher wind speeds. In a downwind configuration, there may be less risk that the soft blades sweep against the tower in case of sudden reduction of wind speed. Soft blades may be constructed relatively light and may reduce the forces directed to the tower construction, because soft blades may absorb part of the load, which may result in a lighter tower construction.

Also, the blades may be of the active stall type. By providing blades of the active stall type, the blade design can become relatively simple. At too high a wind speed, a blade of the active stall type may increase its angle of attack in order to create a stalled condition of the blade, thereby preventing too high a load on the nacelle and/or tower. Due to the active stall characteristics of the blades, a pitch control system may be programmed such that the time interval for adjusting the pitch angle of the blades may become larger, thus reducing possible wear and tear of the pitch adjustment system. By adjusting the pitch angle of the blades, more optimal use may be made of the active stall characteristics of the blades. By providing blades of the active stall type, the power output of the wind turbine may be controlled more accurately, so as to avoid overshooting the rated power of the wind turbine at the beginning of e.g. a gust of wind. Also, the wind turbine may produce approximately at or about rated power at most high wind speeds. In particular, in combination with a downwind configuration and a flexible blade, a blade of the active stall type may be advantageous since the blade may not sweep back against the tower in case of very high wind speeds and/or sudden loss or reduction of wind speed.

In an advantageous embodiment, each wind turbine of the group of similar wind turbines may be provided with two blades. Providing two blades may reduce the manufacturing costs, but may also reduce the transport costs. Transporting two blades instead of e.g. three blades to a remote location may be more cost effective. Also, transport, mounting and/or demounting of a modular unit comprising a nacelle and two blades may be relatively simpler and/or less time consuming.

Further, the invention also relates to a wind turbine for use in a wind turbine park.

### Example

It is noted that the drawings are only diagrammatic and schematic representations of an embodiment of the invention. The embodiment is given by way of non-limiting example. In the figures, the same or corresponding parts are represented with the same reference numerals.

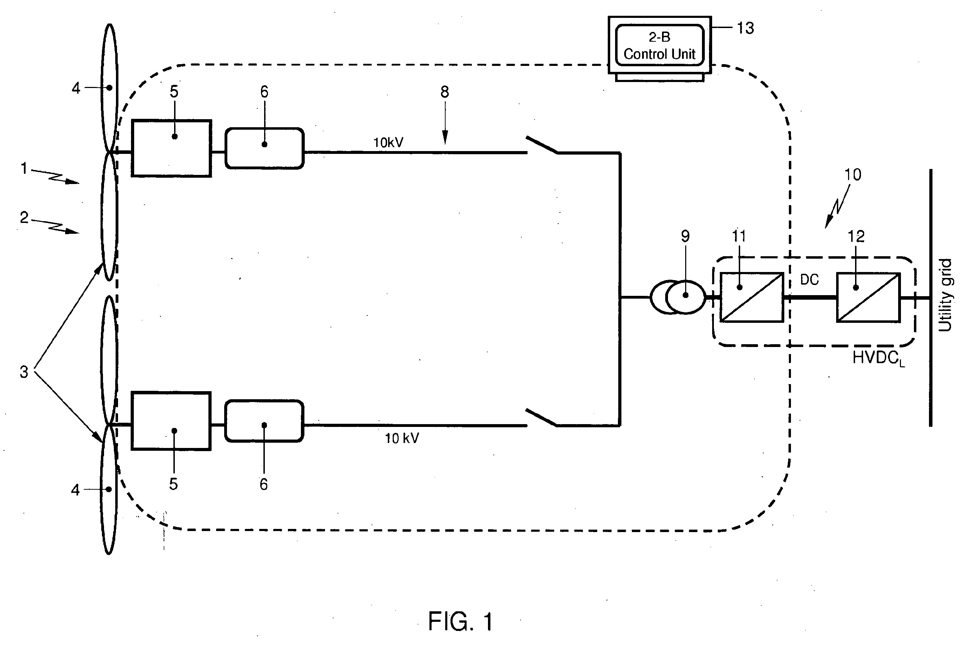

Fig. 1 illustrates a wind turbine park 1 comprising a group 2 of similar wind turbines 3. The group 2 here comprises two similar wind turbines 3. In this embodiment the group 2 of wind turbines is the same as the wind turbine park 1, however, a wind turbine park 1 may also comprise a plurality of groups 2 of wind turbines. The wind turbines 3 of the group 2 of wind turbines are preferably similar, i.e. the wind turbines may have the same or more or less the same tower, nacelle, blades and/or other components.

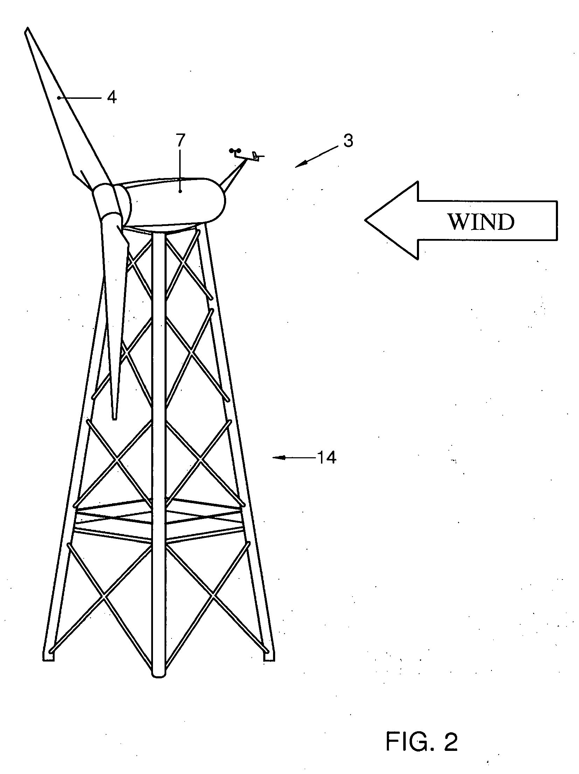

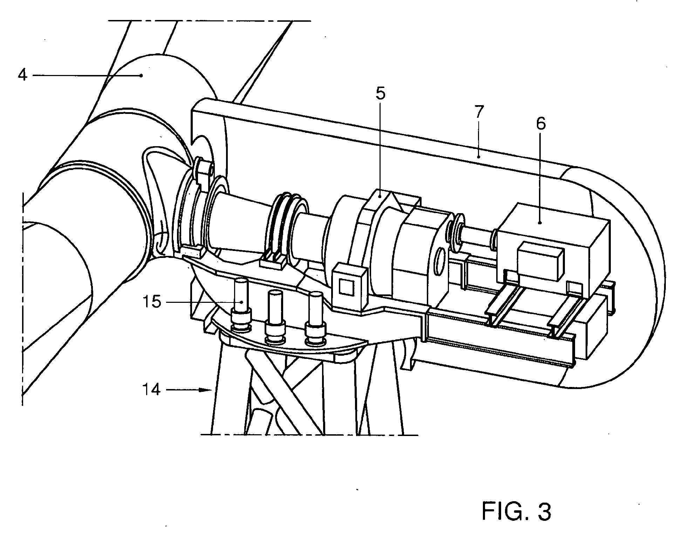

The wind turbines 3 are schematically illustrated by blades 4, a gearbox 5 and a generator 6. The gearbox 5 and generator 6 are housed in a nacelle 7, as shown in Fig. 2 and Fig. 3.

The generator 6 may be a high voltage asynchronous generator, producing electricity at a relatively high voltage. Preferably, the voltage is higher than approximately 1 kV and more preferably the voltage is between approximately 5 kV and approximately 15 kV. The asynchronous generator 6 may for example produce electricity at approximately 10 kV. The gearbox 5 may convert the high torque power from the blades 4 to a low torque power for the generator 6. The gearbox may also be omitted, and gearbox-less solutions may be provided in the nacelle 7 of the wind turbines 3, such as e.g. a direct drive generator. The asynchronous generator 6 may produce electricity in an alternating current mode.

The generator 6 operates in the nacelle 7 in an ambient environment, i.e. there is no climate control system for the nacelle 7. Possibly, components in the nacelle 7 may need their own individual climate control, but this may be arranged in the component itself and not in the whole nacelle.

As can be seen in Fig. 1 and Fig. 3, the wind turbine 3 is transformerless, i.e. there is no transformer in or near the wind turbine. There is only provided a central transformer 9. The high voltage electricity produced by the asynchronous generator 6 is delivered directly to a local electricity grid 8. The electricity of the local electricity grid 8 therefore may have approximately the same voltage as the electricity produced by the generator 6.

In Fig. 1 it is illustrated that the group 2 of wind turbines 3 has one central transformer 9 for transforming the voltage of the electricity of the local electricity grid to a higher voltage for transport over a large distance.

For transport over a large distance an HVDC-system may be used, which transports electricity at a relatively high voltage in a direct current mode, as shown in Fig. 1. The HVDC-system 10 comprises two substations 11 and 12, of which the substation 11 may be located offshore near the wind turbine park and the substation 12 may be located onshore for connection to e.g. a public electricity grid. Between the offshore substation 11 and the onshore substation 12 there is usually a large distance, approximately 30 km or more. The HVDC-system transports electricity over a relatively large distance in a direct current mode at a relatively high voltage, approximately 100 kV or higher. The electricity produced by the wind turbines 3 is usually in an alternating current mode, therefore the offshore substation 11 usually comprises an ACDC-converter to convert the produced electricity from an alternating current mode to a direct current mode.

In Fig. 1 there is schematically shown a central control unit 13. The control unit 13 is central to the group 2 of wind turbines for optimizing the electricity production of the group 2 of wind turbines. The central control unit 13 uses individual wind turbine parameters to adjust the local grid frequency. For adjusting the local grid frequency, use may be made of the offshore substation 11. At each wind turbine 3 wind turbine parameters may be measured and collected by the control unit 13. The control unit 13 then processes these data to calculate a local grid frequency that may be optimal to the collected data. The asynchronous generator 6 of the wind turbines 3 acts like a 'slave' to the local electricity grid 8 and follows the frequency of the local electricity grid 8 adjusted by the central control unit 13. The electricity production by the group 2 of wind turbines may thus be optimized.

Fig. 2 illustrates a wind turbine 3 comprising a tower 14, a nacelle 7 and blades 4. The tower 14 in this embodiment is a truss tower which may be anchored to the sea bed. The wind turbine 3 shown in Fig. 2 has two blades 4. The blades 4 are arranged in a downwind configuration with respect to the wind direction on the tower. The blades 4 are then behind the tower when viewed in the direction of the wind. The blades 4 may be of the soft blade type and/or of the active stall type. The soft blade type is relatively flexible and may reduce the loads on the tower because of a high load absorption capacity due to the flexible design. The blades 4 may be of relatively flexible designs, so that when arranged in a downwind configuration, they will not tend to sweep back against the tower in case of a sudden loss of wind for example. The blades 4 may also be of the active stall type.

In Fig. 3 it is illustrated that the nacelle 7 and the blades 4 are connected to the tower 14 as a modular unit. Preferably, bolts may be used as connection means, but other connection means are also possible, such as screws.

Fig. 3 shows yaw motors 15, which may be used as damping units due to the soft yaw coupling between the nacelle with wind turbine blades and the tower. The nacelle and blades follow the wind direction relatively passively, thereby adjusting the yaw angle relatively smoothly. The yaw motors may then provide damping for a smooth adjustment of the yaw angle.

It should be noted that the above-described embodiment illustrates rather than limits the invention, and various alternatives are possible without departing from the scope of the appended claims.

## Claims

1. A wind turbine park (1) comprising a group (2) of similar wind turbines (3), wherein each wind turbine (3) comprises a tower (14) supporting a nacelle (7) with a number of blades (4), wherein each individual wind turbine (3) is transformerless and comprises a high voltage asynchronous generator (6) for producing electricity in an alternating current mode, wherein the wind turbine park (1) comprises a transformer (9) central to a group of similar transformerless wind turbines (3) for transforming the produced electricity to a higher voltage, a central control unit (13) for optimizing the electricity production of the group of similar transformerless wind turbines (3) and a HVDC-system (10) for transporting the produced electricity in a direct current mode towards a public electricity grid, **characterised in that** if further comprises a converter central to a group (2) of similar transformerless wind turbines (3) for converting the frequency of the produced electricity.

2. A wind turbine park according to claim 1, wherein the HVDC-system (10) comprises two substations (11, 12), an offshore substation (11) connected to the wind turbine park electricity grid, and an onshore substation (12) connected to the public electricity grid (12), wherein an ACDC converter is provided on the offshore substation (11).

3. A wind turbine park according to claim 1, wherein the control unit (13) is configured for adjusting the frequency of an electricity grid (8) of the group of similar transformerless wind turbines (3) using individual wind turbine parameters.

4. A wind turbine park according to claim 2 or claim 3, wherein the nacelle (7) and the blades (4) are provided as a modular unit for mounting and demounting on the tower (14) of a wind turbine (3).

5. A wind turbine park according to any one of the preceding claims, wherein the blades (4) are arranged on the tower (14) of a wind turbine (3) in a downwind configuration with respect to the tower (14).

6. A wind turbine park according to any one of the preceding claims, wherein the blades (4) of a wind turbine (3) are of the soft blade type.

7. A wind turbine park according to any one of the preceding claims, wherein each wind turbine (3) comprises two blades (4).

8. A wind turbine park according to any one of the preceding claims, wherein the tower (14) of a wind turbine (3) comprises a truss tower.

9. A wind turbine park according to any one of the preceding claims, wherein the coupling between the nacelle (7) and the tower (14) is of the soft yaw type.

10. A wind turbine park according to any one of the preceding claims, wherein the nacelle (7) is configured for operation of the high voltage generator (6) in an ambient air environment by omitting a nacelle climate control system.

11. A wind turbine park according to any one of the preceding claims, wherein the nacelle (7) of a wind turbine (3) is further provided with a gearbox (5) which is arranged between the blades (4) and the high voltage generator (6).

12. A wind turbine park according to any one of the preceding claims, wherein the blades (4) of a wind turbine (3) are of the active stall type.

13. A wind turbine park according to any one of the preceding claims, wherein the high voltage generator (6) generates electricity with a voltage higher than approximately 1 kV.

14. A wind turbine park according to claim 13, wherein the high voltage generator (6) generates electricity with a voltage between approximately 5 kV and approximately 15 kV.

## Patentansprüche

1. Windpark (1), umfassend eine Gruppe (2) ähnlicher Windturbinen (3), wobei jede Windturbine (3) einen Turm (14) umfasst, der ein Maschinenhaus (7) mit einer Anzahl Rotorblätter (4) trägt, wobei jede individuelle Windturbine (3) transformatorlos ist und einen asynchronen Hochspannungsgenerator (6) umfasst, um Elektrizität in einem Wechselstrommodus zu produzieren, wobei der Windpark (1) einen Transformator (9), der zentral zu einer Gruppe ähnlicher transformatorloser Windturbinen (3) ist, um die produzierte Elektrizität in eine höhere Spannung zu umzuwandeln, eine zentrale Steuereinheit (13), um die Elektrizitätsproduktion der Gruppe ähnlicher transformatorloser Windturbinen (3) zu optimieren, und ein HVDC-System (10), um die produzierte Elektrizität in einem Gleichstrommodus zu einem öffentlichen Elektrizitätsnetz zu transportieren, umfasst, **dadurch gekennzeichnet, dass** er ferner einen Umformer, der zentral zu einer Gruppe (2) ähnlicher transformatorloser Windturbinen (3) ist, umfasst, um die Frequenz der produzierten Elektrizität umzuformen.

2. Windpark nach Anspruch 1, wobei das HVDC-System (10) zwei Umspannstationen (11, 12), eine Offshore-Umspannstation (11), verbunden mit dem Elektrizitätsnetz des Windparks, und eine Onshore-Umspannstation (12), verbunden mit dem öffentlichen Elektrizitätsnetz (12), umfasst, wobei ein ACDC-Umformer auf der Offshore-Umspannstation (11) bereitgestellt ist.

3. Windpark nach Anspruch 1, wobei die Steuereinheit (13) konfiguriert ist, um die Frequenz eines Elektrizitätsnetzes (8) der Gruppe ähnlicher transformatorloser Windturbinen (3) unter Verwendung individueller Windturbinenparameter anzupassen.

4. Windpark nach Anspruch 2 oder Anspruch 3, wobei das Maschinenhaus (7) und die Rotorblätter (4) als eine modulare Einheit zum Montieren an und Demontieren von dem Turm (14) einer Windturbine (3) bereitgestellt sind.

5. Windpark nach einem der vorhergehenden Ansprüche, wobei die Rotorblätter (4) an dem Turm (14) einer Windturbine (3) in einer in Windrichtung liegenden Konfiguration in Bezug auf den Turm (14) angeordnet sind.

6. Windpark nach einem der vorhergehenden Ansprüche, wobei die Rotorblätter (4) einer Windturbine (3) vom weichen Blatttyp sind.

7. Windpark nach einem der vorhergehenden Ansprüche, wobei jede Windturbine (3) zwei Rotorblätter (4) umfasst.

8. Windpark nach einem der vorhergehenden Ansprüche, wobei der Turm (14) einer Windturbine (3) einen Gitterturm umfasst.

9. Windpark nach einem der vorhergehenden Ansprüche, wobei die Kopplung zwischen dem Maschinenhaus (7) und dem Turm (14) vom weichen Gierungstyp ist.

10. Windpark nach einem der vorhergehenden Ansprüche, wobei das Maschinenhaus (7) für den Betrieb des Hochspannungsgenerators (6) in Umgebungsluft unter Weglassen eines Maschinenhaus-Klimatisierungssystems konfiguriert ist.

11. Windpark nach einem der vorhergehenden Ansprüche, wobei das Maschinenhaus (7) einer Windturbine (3) ferner mit einem Getriebe (5) versehen ist, das zwischen den Rotorblättern (4) und dem Hochspannungsgenerator (6) angeordnet ist.

12. Windpark nach einem der vorhergehenden Ansprüche, wobei die Rotorblätter (4) einer Windturbine (3) vom aktiven Sperrtyp sind.

13. Windpark nach einem der vorhergehenden Ansprüche, wobei der Hochspannungsgenerator (6) Elektrizität mit einer höheren Spannung als ungefähr 1 kV erzeugt.

14. Windpark nach Anspruch 13, wobei der Hochspannungsgenerator (6) Elektrizität mit einer Spannung zwischen ungefähr 5 kV und ungefähr 15 kV erzeugt.

## Revendications

1. Parc d'éoliennes (1) comprenant un groupe (2) d'éoliennes (3) similaires, dans lequel chaque éolienne (3) comprend une tour (14) supportant une nacelle (7) avec un certain nombre de pales (4), dans lequel chaque éolienne (3) individuelle ne comporte pas de transformateur et comprend un générateur asynchrone haute tension (6) pour produire de l'électricité selon un mode de courant alternatif, dans lequel le parc d'éoliennes (1) comprend un transformateur (9) au centre d'un groupe d'éoliennes (3) sans transformateur similaires pour transformer l'électricité produite en plus haute tension, une unité de commande centrale (13) pour optimiser la production d'électricité du groupe d'éoliennes sans transformateur (3) similaires et un système HVDC (10) pour transporter l'électricité produite selon un mode de courant continu vers un réseau d'électricité public, **caractérisé en ce qu'**il comprend un convertisseur central par rapport à un groupe (2) d'éoliennes sans transformateur (3) similaires pour convertir la fréquence de l'électricité produite.

2. Parc d'éoliennes selon la revendication 1, dans lequel le système HVDC (10) comprend deux sous-stations (11, 12), une sous-station en mer (11) raccordée au réseau d'électricité du parc d'éoliennes et une sous-station sur terre (12) raccordée au réseau d'électricité public (12) dans lequel un convertisseur CA-CC est prévu sur la sous-station en mer (11).

3. Parc d'éoliennes selon la revendication 1, dans lequel l'unité de commande (13) est configurée pour ajuster la fréquence d'un réseau d'électricité (8) du groupe d'éoliennes sans transformateur (3) similaires en utilisant des paramètres d'éolienne individuels.

4. Parc d'éoliennes selon la revendication 2 ou la revendication 3, dans lequel la nacelle (7) et les pales (4) sont prévues sous la forme d'une unité modulaire destinée à être montée et démontée de la tour (14) d'une éolienne (3).

5. Parc d'éoliennes selon l'une quelconque des revendications précédentes, dans lequel les pales (4) sont agencées sur la tour (14) d'une éolienne (3) dans une configuration sous le vent par rapport à la tour (14).

6. Parc d'éoliennes selon l'une quelconque des revendications précédentes, dans lequel les pales (4) d'une éolienne (3) sont du type à pale souple.

7. Parc d'éoliennes selon l'une quelconque des revendications précédentes, dans lequel chaque éolienne (3) comprend deux pales (4).

8. Parc d'éoliennes selon l'une quelconque des revendications précédentes, dans lequel la tour (14) d'une éolienne (3) comprend une tour en treillis.

9. Parc d'éoliennes selon l'une quelconque des revendications précédentes, dans lequel le couplage entre la nacelle (7) et la tour (14) est du type à lacet souple.

10. Parc d'éoliennes selon l'une quelconque des revendications précédentes, dans lequel la nacelle (7) est configurée pour le fonctionnement du générateur haute tension (6) dans un environnement d'air ambiant en omettant un système de régulation de climat de nacelle.

11. Parc d'éoliennes selon l'une quelconque des revendications précédentes, dans lequel la nacelle (7) d'une éolienne (3) est en outre prévue avec une boîte d'engrenages (5) qui est agencée entre les pales (4) et le générateur haute tension (6).

12. Parc d'éoliennes selon l'une quelconque des revendications précédentes, dans lequel les pales (4) d'une éolienne (3) sont du type à décrochage actif.

13. Parc d'éoliennes selon l'une quelconque des revendications précédentes, dans lequel le générateur haute tension (6) génère de l'électricité avec une tension supérieure à approximativement 1 kV.

14. Parc d'éoliennes selon la revendication 13, dans lequel le générateur haute tension (6) génère de l'électricité avec une tension comprise entre approximativement 5 kV et approximativement 15 kV.
